# EUROPEAN PATENT APPLICATION

(11) **EP 4 810 855 A1**
(43) Date of publication of application: **23.09.2026**
(21) Application number: 24906263.9
(22) Date of filing: 13.12.2024
(51) Int. Cl.: F21S 41/24, F21S 43/235, F21S 41/29, B60Q 1/04

(54) **HEADLAMP ASSEMBLY, FULL-WIDTH HEADLAMP AND VEHICLE**

(30) Priority: 18.12.2023 CN 202311738329; 18.12.2023 CN 202323443777 U; 18.12.2023 CN 202323455438 U; 18.12.2023 CN 202323443788 U
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: CHANG, Yuyang, Ningbo, Zhejiang 315899 (CN); QI, Feng, Ningbo, Zhejiang 315899 (CN); YANG, Qiankun, Ningbo, Zhejiang 315899 (CN); CHEN, Chaojun, Ningbo, Zhejiang 315899 (CN); TIAN, Dongli, Ningbo, Zhejiang 315899 (CN)
(74) Representative: Michalski Hüttermann & Partner mbB
(86) International application number: PCT/CN2024/139264
(87) International publication number: WO 2025/130782

(57) **Abstract**

A headlamp assembly (1000), a full-width headlamp, and a vehicle. The headlamp assembly (1000) includes a multifunctional light strip (10), where the multifunctional light strip (10) includes: a light guide member (101), a light source (102), a first light-shielding member (103), and a second light-shielding member (104). The light guide member (101) is provided with a light-incident portion (1011) on one end thereof, and a light-exiting portion (1012) on the other end thereof, where the light-exiting portion (1012) is configured in a flat shape. The light source (102) is disposed opposite to the light-incident portion (1011). The first light-shielding member (103) covers a first side of the light-exiting portion (1012). The second light-shielding member (104) covers a second side of the light-exiting portion (1012). An end of the light-exiting portion (1012) extends beyond edges of the first light-shielding member (103) and the second light-shielding member (104).

## Description

### TECHNICAL FIELD

Embodiments of the present disclosure relate to, but are not limited to, the field of lamp technologies, and in particular to a headlamp assembly, a full-width headlamp, and a vehicle.

### BACKGROUND

A multifunctional light strip of a vehicle plays a very important role in the aesthetics of the vehicle, and is a key element in the design of the vehicle. Different designs of the multifunctional light strip can make the vehicle look more technological, luxurious, or sporty. A well-designed multifunctional light strip can make the vehicle look more distinctive, aggressive, or elegant; and meanwhile, the quality of the design of the multifunctional light strip also affects the driving safety.

### SUMMARY

The following is a summary of subject matter described in detail herein. This summary is not intended to limit the scope of protection of the claims.

Current multifunctional light strips, such as daytime running lamps, position lamps, or turn signal lamps, on the one hand, lack the aesthetics of floating light, and on the other hand, have low light uniformity and are prone to generate glare, which affects the driving safety.

In view of the above problems, an objective of the present disclosure is to provide a headlamp assembly, a full-width headlamp, and a vehicle, where the headlamp assembly includes a multifunctional light strip, and the multifunctional light strip can provide the aesthetics of floating light while light emitted by the multifunctional light strip is relatively uniform, which can reduce the generation of glare to a certain extent and is beneficial to improving the driving safety.

To achieve the above objective and other related objectives, the present disclosure provides a headlamp assembly, including a multifunctional light strip, where the multifunctional light strip includes:
a light guide member including a light-incident portion on one end and a light-exiting portion on another end, where the light-exiting portion is configured in a flat shape;
a light source disposed opposite to the light-incident portion;
a first light-shielding member covering a first side of the light-exiting portion; and
a second light-shielding member covering a second side of the light-exiting portion,
where an end of the light-exiting portion extends beyond edges of the first light-shielding member and the second light-shielding member.

In an embodiment of the present disclosure, the light source includes a first light source and a second light source; and
the light guide member includes a first light guide portion disposed corresponding to the first light source and a second light guide portion disposed corresponding to the second light source, and the first light guide portion and the second light guide portion are arranged in a width direction of a vehicle body.

In an embodiment of the present disclosure, at least one of the first light source or the second light source includes at least two light-emitting elements with different light colors, which are configured to be independently controllable.

In an embodiment of present disclosure, a gap is provided between the first light guide portion and the second light guide portion, a third light-shielding member is disposed in the gap, and the third light-shielding member is connected to the first light-shielding member or the second light-shielding member;
a fourth light-shielding member is disposed above the light guide member, and a fifth light-shielding member is disposed in rear of the light guide member; and
a cavity is enclosed by the first light-shielding member, the second light-shielding member, the fourth light-shielding member, and the fifth light-shielding member together, and is configured to accommodate the light source and the light guide member.

In an embodiment of the present disclosure, at least two light guide inclined surfaces are provided between the light-incident portion and the light-exiting portion of the light guide member, and each of the light guide inclined surfaces is provided with a light distribution pattern.

In an embodiment of the present disclosure, the headlamp assembly further includes a high/low beam module, where the multifunctional light strip and the high/low beam module are integrated in a common lamp housing.

In an embodiment of present disclosure, the headlamp assembly further includes a lamp cover disposed in front of the multifunctional light strip and the high/low beam module.

In an embodiment of the present disclosure, the lamp housing includes on each side:
a mounting bracket configured to be connected to a vehicle body, where a plurality of mounting brackets are sequentially disposed in a length direction of the lamp housing, and at least part of the mounting brackets are provided with mounting portions; and
an overlapping portion, overlapped and limited on a front end frame of the vehicle body or a sheet metal of the vehicle body,
where at least one mounting bracket at one end of the lamp housing is provided with a reference positioning portion configured to limit relative positions of the lamp housing in a length direction and a width direction of the vehicle body; and
at least one mounting bracket at another end of the lamp housing is provided with a movable positioning portion configured to limit the relative position of the lamp housing in the length direction of the vehicle body.

In an embodiment of the present disclosure, at least one of the mounting brackets is provided with a fragile portion and a connecting portion, and the connecting portion is configured to be connected to a spare mounting bracket.

In an embodiment of the present disclosure, a headlamp seal is provided between the headlamp assembly and a front hood; the headlamp seal is configured to form a seal between the headlamp assembly and the front hood, and the headlamp seal has a variable cross-section;
a cross-sectional shape and/or a cross-sectional area of the headlamp seal gradually changes from a first end to a second end of the headlamp seal; and
the first end is located close to a middle of a vehicle in a width direction, and the second end is located close to a fender of the vehicle.

In an embodiment of the present disclosure, the headlamp seal is provided with a strip-shaped cavity in a length direction thereof, and a cross-sectional shape and/or a cross-sectional area of the strip-shaped cavity gradually changes from the first end to the second end of the headlamp seal.

In an embodiment of the present disclosure, the headlamp seal includes:
a lamp assembly sealing surface configured to fit against the headlamp assembly;
a hood sealing edge configured to fit against a lower side of a front end of the front hood;
a mounting surface configured to be mounted to a vehicle frame; and
an arcuate surface disposed opposite to the mounting surface.

To achieve the above objective and other related objectives, the present disclosure provides a full-width headlamp, including:
a multifunctional light strip extending from two sides of a front end of a vehicle to a middle of the front end of the vehicle; and
a high/low beam module mounted below the multifunctional light strip and disposed close to the two sides of the front end of the vehicle.

In an embodiment of the present disclosure, a front camera module is further provided in the middle of the front end of the vehicle, and the multifunctional light strip is distributed on two sides of the front camera module.

In an embodiment of the present disclosure, the full-width headlamp further includes an exterior trim panel, where the exterior trim panel is located above the multifunctional light strip, and the exterior trim panel is disposed to extend across a front end of a vehicle body of the vehicle in a width direction of the vehicle body.

To achieve the above objective and other related objectives, the present disclosure provides a vehicle, including the headlamp assembly or the full-width headlamp.

In an embodiment of the present disclosure, the vehicle further includes a mounting bracket for a front bumper, where the mounting bracket for the front bumper includes a bracket body, and the bracket body is provided with:
a first connecting portion configured to be connected to a lamp;
a slot structure configured to enable an edge of the front bumper to be inserted therein in a first direction, where the first direction is a front-rear direction of a vehicle body; and
a first limiting portion configured to retain the edge of the front bumper, that is inserted into the slot structure, in the slot structure.

In an embodiment of the present disclosure, the slot structure includes a first clamping portion and a second clamping portion;
where the first clamping portion and the second clamping portion are both cantilevered from the bracket body towards a front end of the vehicle, so that the slot structure can at least generate a vertical support force for the front bumper.

In an embodiment of the present disclosure, the bracket body further includes a first wall configured to fit and mate with a bottom of the lamp, and a second wall configured to fit and mate with a front of the lamp; and
the first limiting portion is disposed on the first wall, and the slot structure is disposed on the second wall facing the front bumper.

In summary, in the present disclosure, the light source emits the light beam, at least a part of which enters the light guide member from the light-incident portion of the light guide member, and exits the light guide member from the light-exiting portion of the light guide member. The light-exiting portion is configured in a flat structure, and the end of the light-exiting portion extends beyond the edges of the first light-shielding member and the second light-shielding member, so that the aesthetics of floating light can be presented, and the flat light-exiting portion enables the light from the light source to be dispersed on the irradiated surface more evenly, so as to reduce the occurrence of excessively high or low local brightness. The flat light-exiting portion requires less space, which can reduce the volume of the lamp and facilitate the mounting and usage. Moreover, the flat light-exiting portion has the characteristics of dispersion of the light, reduced reflection of the light, and the like, so that the flat light-exiting portion can reduce the glare generated by the multifunctional light strip to a certain extent, avoid discomfort to the oncoming drivers or pedestrians, and improve the driving safety. Meanwhile, the flat light-exiting portion can better match the overall design of the multifunctional light strip of the vehicle, and when the light guide member is streamlined, a streamlined lamp with the flat light-exiting portion can be more easily integrated into the overall design of the vehicle, providing the vehicle with a modern and futuristic appearance.

Other aspects will become apparent upon reading and understanding the accompanying drawings and detailed description.

### BRIEF DESCRIPTION OF DRAWINGS

In order to more clearly illustrate technical solutions in embodiments of the present disclosure or in the related art, the drawings to be used in the description of the embodiments or the related art will be briefly introduced below. It is apparent that the drawings in the following description are only some of the embodiments of the present disclosure, and those of ordinary skill in the art can obtain other drawings from these drawings without creative efforts.
FIG. 1 is a schematic structural diagram of a multifunctional light strip in an embodiment of the present disclosure.
FIG. 2 is a schematic structural diagram of a multifunctional light strip in another embodiment of the present disclosure.
FIG. 3 is a schematic diagram of a three-dimensional structure of a light guide member in an embodiment of present disclosure.
FIG. 4 is an enlarged view of portion A in FIG. 3.
FIG. 5 is a sectional view of a structure of a headlamp assembly at a front end of a vehicle in an embodiment of present disclosure.
FIG. 6 illustrates a schematic diagram and a partial enlarged view of a front structure of a lamp housing in an embodiment of the present disclosure.
FIG. 7 illustrates a schematic diagram and a partial enlarged view of a rear structure of a lamp housing in an embodiment of present disclosure.
FIG. 8 is a schematic structural diagram of a headlamp seal in an embodiment of present disclosure.
FIG. 9 is a schematic cross-sectional view of a headlamp seal in an embodiment of the present disclosure.
FIG. 10 is a partial enlarged view of portion B in FIG. 8.
FIG. 11 is a partial enlarged view of portion C in FIG. 8.
FIG. 12 is a schematic structural diagram of a full-width headlamp in an embodiment of present disclosure.
FIG. 13 is a schematic diagram of an overall front structure of a mounting bracket for a front bumper in an embodiment of present disclosure.
FIG. 14 is a schematic diagram of a mounting structure of a mounting bracket for a front bumper and a front of a headlamp assembly in an embodiment of present disclosure.
FIG. 15 is a schematic diagram of a structure of a front bumper mounted on a mounting bracket for the front bumper in an embodiment of present disclosure.
FIG. 16 is a schematic diagram of a mounting structure of a mounting bracket for a front bumper and a bottom of a headlamp assembly in an embodiment of present disclosure.
FIG. 17 is a schematic diagram of an overall side structure of a mounting bracket for a front bumper in an embodiment of present disclosure.

Description of reference numerals:
headlamp assembly 1000, multifunctional light strip 10, light guide member 101, light-incident portion 1011, light-exiting portion 1012, first light guide portion 1013, second light guide portion 1014, gap 1015, light guide inclined surface 1016, connection point 1017, light source 102, circuit board 1021, first light-shielding member 103, second light-shielding member 104, mounting positioning portion 1041, fourth light-shielding member 105, fifth light-shielding member 106, cavity 107, lamp cover 108, condenser 109;
high/low beam module 20, light-shielding trim panel 2021, front camera module 30, exterior trim panel 40, lamp housing 50, mounting bracket 5051, mounting portion 50511, reference positioning portion 50512, movable positioning portion 50513, fragile portion 50514, connecting portion 50515, overlapping portion 5052, limiting protrusion 50521;
headlamp seal 60, lamp assembly sealing surface 6011, hood sealing edge 6012, mounting surface 6013, arcuate surface 6014, first limiting edge 6015, second limiting edge 6016, positioning protrusion 6017, elastic plug 6018, strip-shaped cavity 6019;
mounting bracket 70 for front bumper, bracket body 7010, positioning hole 7011, first wall 7012, second wall 7013, first connecting portion 701, slot structure 702, first clamping portion 7021, second clamping portion 7022, first limiting portion 703, positioning post 702021, front bumper 70300.

### DETAILED DESCRIPTION

Embodiments of the present disclosure will be described in detail below through specific examples, and those skilled in the art can easily understand other advantages and effects of the present disclosure from the contents disclosed in the specification. The present disclosure can also be implemented or applied through other different specific embodiments, and various details in the specification can also be modified or changed based on different viewpoints and applications without departing from the spirit of the present disclosure. It should be noted that the following embodiments and features in the embodiments may be combined with each other without conflict. It should be further understood that the terms used in the embodiments of present disclosure are intended to describe specific implementations, but are not intended to limit the scope of protection of present disclosure. The test methods without specific conditions in the following embodiments are generally in accordance with conventional conditions or in accordance with conditions recommended by various manufacturers.

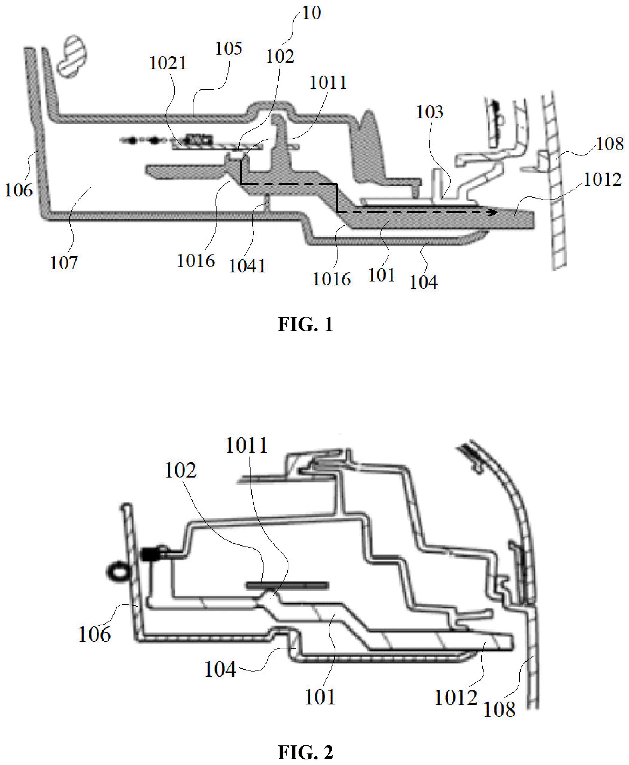

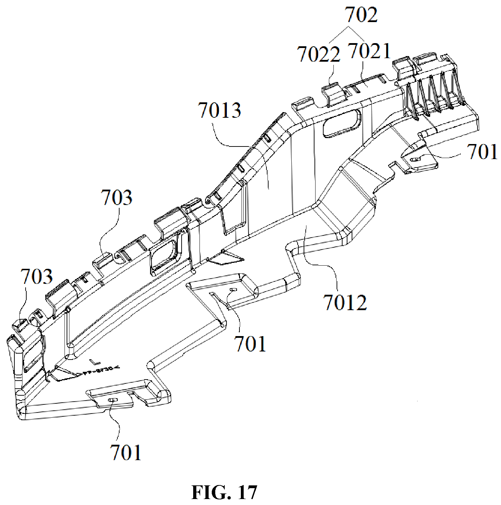

Please refer to FIGS. 1 to 17. It should be noted that the structures, proportions, sizes, etc. illustrated in the drawings of the present disclosure are only used to cooperate with the contents disclosed in the specification for those skilled in the art to understand and read, and are not used to limit the limitation conditions in which the present disclosure can be implemented, and thus have no technical substantive meanings. Any modification of the structures, change of the proportional relationship, or adjustment of the sizes should still fall within the scope covered by the technical contents disclosed in the present disclosure without affecting the effects and purposes that can be achieved by the present disclosure. Meanwhile, the terms such as "upper", "lower", "left", "right", "middle", and "a" used in this specification are only for the convenience of description, and are not intended to limit the scope of implementation of the present disclosure, and the change or adjustment of the relative relationship thereof is also considered to be within the scope of implementation of the present disclosure without substantial change of the technical contents.

When numerical ranges are given in the embodiments, it should be understood that, two endpoints of each numerical range and any value between the two endpoints may be selected, unless otherwise specified in the present disclosure. Unless otherwise defined, all technical and scientific terms used in the present disclosure are consistent with the knowledge of the related art by those skilled in the art and the description of the present disclosure, and the present disclosure may also be implemented using any method, device, and material in the related art that is similar or equivalent to the method, device, and material described in the embodiments of the present disclosure.

Each of light-emitting elements or lamp beads described in the present disclosure includes an LED (light-emitting diode), an OLED (organic light-emitting diode), a QLED (quantum dot light-emitting diode), or an LD (laser diode), and each type of light-emitting element is disposed on a corresponding circuit board and electrically connected to the corresponding circuit board. The circuit board is further provided with a driver chip that is electrically connected to the corresponding light-emitting element. The circuit board is further connected to a controller, the controller is electrically connected to the driver chip, and the controller is configured to control independent lighting of corresponding light-emitting elements to expand functionality of a light source.

Taking the vehicle coordinate system as a reference, when the vehicle is located on a flat horizontal plane, the direction of the vehicle body towards the front of the vehicle is indicative of the front, front end, or front portion, and the direction of the vehicle body towards the rear of the vehicle is indicative of the rear, rear end, or rear portion. In the vertical direction of the vehicle, the upper, upper end, or upper portion is in the vertical upward direction of the vehicle, and the lower, lower end, or lower portion is in the vertical downward direction of the vehicle. The width direction of the vehicle body is perpendicular to the length direction of the vehicle body, and both the width direction of the vehicle body and the length direction of the vehicle body are perpendicular to the vertical direction.

Referring to FIG. 1 or 2 and FIG. 5, the present disclosure provides a headlamp assembly 1000, including a multifunctional light strip 10, where the multifunctional light strip 10 includes a light guide member 101, a light source 102, a first light-shielding member 103, and a second light-shielding member 104.

The light guide member 101 is provided with a light-incident portion 1011 on one end, and is provided with a light-exiting portion 1012 on the other end, where the light-exiting portion 1012 is configured in a flat shape. The light source 102 is disposed opposite to the light-incident portion 1011. The first light-shielding member 103 covers a first side of the light-exiting portion 1012. The second light-shielding member 104 covers a second side of the light-exiting portion 1012. An end of the light-exiting portion 1012 extends beyond edges of the first light-shielding member 103 and the second light-shielding member 104.

It should be noted that the light guide member 101 is a component that guides or distributes the light emitted from the light source 102 to achieve a specific lighting mode or aesthetic effect, and the light guide member 101 may be a lens, a reflector, a light guide tube, or other components that meet the usage requirements of the present disclosure. The light source 102 is a light-emitting diode (LED), an organic light-emitting diode (OLED), a laser lamp, a xenon lamp, or other light sources that meet the usage requirements of the present disclosure, and in the present disclosure, the light source 102 may be an LED or an OLED. The first light-shielding member 103 and the second light-shielding member 104 are components capable of shielding stray light, and the first light-shielding member 103 and the second light-shielding member 104 may also serve as mounting brackets for mounting the light guide member 101 and the light source 102. The first side and the second side in the present disclosure primarily refer to upper and lower sides of the light guide member 101, which are defined with respect to the direction of the vehicle. However, the light guide member 101 may further include sides other than the light-incident portion 1011 and the light-exiting portion 1012, as long as the usage requirements of the present disclosure can be met. In the present disclosure, as shown in FIG. 1, the dotted line with an arrow indicates the light beam path of the lamp in the present disclosure. The light source 102 emits a light beam, at least a part of which enters the light guide member 101 from the light-incident portion 1011 of the light guide member 101, and exits the light guide member 101 from the light-exiting portion 1012 of the light guide member 101. The light-exiting portion 1012 is configured in a flat structure, and the end of the light-exiting portion 1012 extends beyond the edges of the first light-shielding member 103 and the second light-shielding member 104, so that the aesthetics of floating light can be presented. When the light guide member 101 is arranged in a strip shape at the front end of the vehicle, it can present the aesthetics of a strip-shaped floating light.

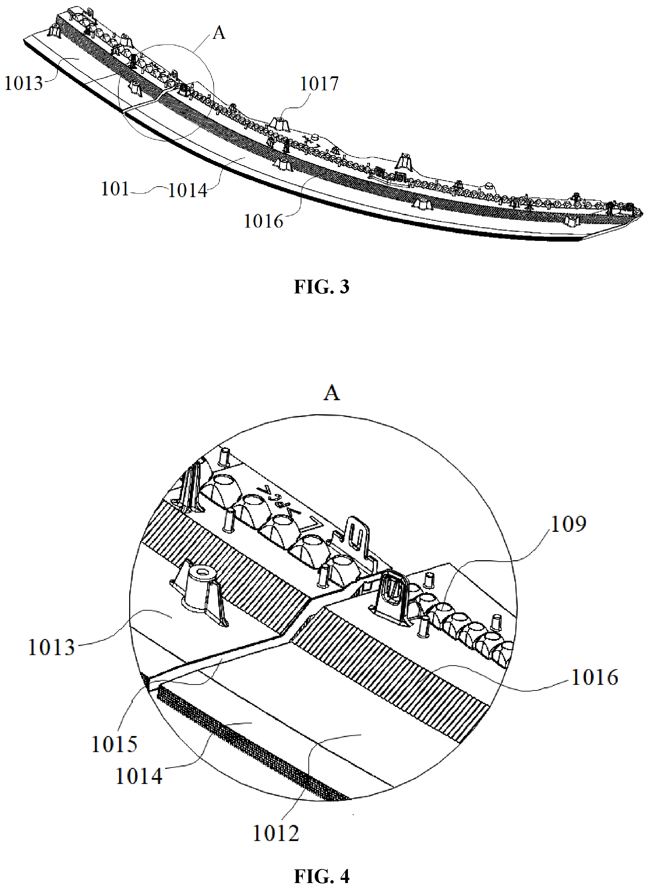

As an optional embodiment of the present disclosure, referring to FIG. 1 or 3, the light-exiting portion 1012 is configured in the flat shape, so that the light from the light source 102 can be more evenly dispersed on the irradiated surface, reducing the occurrence of excessively high or low local brightness. The flat light-exiting portion 1012 has a relatively high light transmittance, so that the brightness and energy efficiency of the light source 102 can be maximized. Compared with the traditional spherical or circular light-exiting portion 1012, the flat light-exiting portion 1012 requires less space, so that the volume of the lamp can be further reduced, facilitating the mounting and usage. The flat light-exiting portion 1012 can better match the overall design of the headlamp assembly 1000, and when the light guide member 101 is streamlined, the streamlined lamp with the flat light-exiting portion 1012 can be more easily integrated into the overall design of the vehicle, providing the vehicle with a modern and futuristic appearance. The flat light-exiting portion 1012 has the characteristics of dispersion of the light, reduced reflection of the light, and the like, so that the flat light-exiting portion 1012 can reduce the glare generated by the lamp to a certain extent, and avoid discomfort to the oncoming drivers or pedestrians. The stray light at the light-exiting portion 1012 is shielded by the first light-shielding member 103 and the second light-shielding member 104, so that the lamp has a better color rendering index, and the light color and shape of the lamp are easier to be recognized by the pedestrians, improving safety during driving at night.

As an optional embodiment of the present disclosure, referring to FIGS. 3 and 4, the light source 102 includes a first light source and a second light source.

The light guide member 101 includes a first light guide portion 1013 disposed corresponding to the first light source and a second light guide portion 1014 disposed corresponding to the second light source, and the first light guide portion 1013 and the second light guide portion 1014 are arranged in the width direction of the vehicle body.

It should be noted that the light colors of the first light source and the second light source can be configured to be the same or different from each other, and the first light source and the second light source can be configured to be independently controlled to realize individual lighting of the first light source or the second light source, or simultaneous lighting of the first light source and the second light source. The light source 102 is divided into the first light source and the second light source, but it should be understood that, the light source 102 may be divided into the first light source, the second light source, a third light source, a fourth light source, or more light sources. The light guide member 101 can also include a third light guide portion disposed corresponding to the third light source, and a fourth light guide portion disposed corresponding to the fourth light source, or more light guide portions. By making the first light source correspond to the first light guide portion 1013, and the second light source correspond to the second light guide portion 1014, the lamp can emit distinguishable light. The first light guide portion 1013 and the second light guide portion 1014 are arranged in the width direction of the vehicle body. It should be understood that the first light source is also arranged in the width direction of the vehicle body correspondingly to the first light guide portion 1013, and the second light source is also arranged in the width direction of the vehicle body correspondingly to the second light guide portion 1014, thereby forming a strip-shaped or streamlined lamp, which is beneficial to improving the aesthetics of the lamp and improving the functional diversity of the lamp, which, for example, can be used as a daytime running lamp, a position lamp, or other functional lamps of the vehicle.

As an optional embodiment of the present disclosure, referring to FIG. 1, each of the first light source and the second light source includes a circuit board 1021, a light-emitting element, a driver chip, and a controller. A plurality of light-emitting elements are disposed on the circuit board 1021 and electrically connected to the circuit board 1021. The driver chip is disposed on the side of the circuit board 1021 and electrically connected to the corresponding light-emitting elements through the circuit board 1021. The controller is electrically connected to the driver chip, and the controller is configured to control independent lighting of the corresponding light-emitting elements to expand the function of the light source 102. It should be understood that the first light source and the second light source may also have common components, for example, the first light source and the second light source may share a common controller.

As an optional embodiment of the present disclosure, the circuit board 1021 of the light source 102 is provided in multiple sections in the width direction of the vehicle body to adapt to the shape of the front end of the vehicle, so that the lamp located at the front end of the vehicle can create a streamlined lighting atmosphere.

As an optional embodiment of the present disclosure, referring to FIGS. 1 to 3, at least one light source 102 in the first light source and the second light source has at least two light-emitting elements with different light colors, and the light-emitting elements with different light colors are configured to be independently controllable.

It should be noted that, since the light-emitting elements with different light colors can be independently controlled, the lamp can provide different light colors and/or brightness according to needs, and provide more usage scenarios and customized options. For example, in vehicle lighting, one lamp can be switched to a more suitable light color according to weather conditions or driving environments. Different light colors can be selected according to different usage requirements, for example, using yellow light during driving in foggy conditions can be more effective, because the yellow light has a longer wavelength and better transmittance. The light colors of the light-emitting elements can be independently controlled, so that the vehicle can adapt to different road conditions, improving the safety. According to requirements, only the required light-emitting elements are turned on, and the daytime running lamp is used instead of all the headlamps at daytime, or only enough lighting is used according to needs at night, so that energy consumption can be reduced. Since the light-emitting elements with various colors can be independently controlled, some of the light-emitting elements can be turned off when not needed, thereby reducing the overall usage frequency and helping to prolong the service life of the lamp. Meanwhile, the light-emitting elements with different light colors can create different atmospheres and visual effects, providing with the vehicle owner more comfortable driving experience.

As an optional embodiment of the present disclosure, the first light source includes only white LEDs, and the second light source includes white LEDs and yellow LEDs arranged in a staggered manner, so that the light source 102 and the light guide member 101 are used in cooperation to provide an integrated function of a daytime running lamp, a turn signal lamp, and a position lamp. The second light source corresponds to the relatively long second light guide member 101. For example, the yellow LEDs, when lit alone, may serve as the turn signal lamp, and the white LEDs of the first light source and the white LEDs of the second light source, when lit at the same time, may serve as the daytime running lamp and the position lamp. Meanwhile, the brightness of the first light source and the brightness of the second light source may be controlled according to actual needs. The multifunctional light strip 10 is provided in two groups that are symmetrically arranged at the front end of the vehicle to meet the usage requirements.

As an optional embodiment of the present disclosure, referring to FIGS. 2 and 3, a gap 1015 is provided between the first light guide portion 1013 and the second light guide portion 1014. A third light-shielding member is disposed in the gap 1015, and the third light-shielding member is connected to the first light-shielding member 103 or the second light-shielding member 104.

It should be noted that there is the gap 1015 between the first light guide portion 1013 and the second light guide portion 1014. It should be understood that the first light guide portion 1013 and the second light guide portion 1014 may also have a small portion integrally connected, or the first light guide portion 1013 and the second light guide portion 1014 may be completely separated, both of which can allow for a gap 1015 between the first light guide portion 1013 and the second light guide portion 1014. By providing the third light-shielding member in the gap 1015, the mutual influence between the light beams from the first light guide portion 1013 and the second light guide portion 1014 can be avoided or reduced, so that the light guide accuracy of the first light guide portion 1013 and the second light guide portion 1014 can be improved, which is beneficial to improving the aesthetics of the lamp. By connecting or integrally forming the third light-shielding member with the first light-shielding member 103 or the second light-shielding member 104, the third light-shielding member can be stably mounted, or the overall complexity of the light-shielding member can be simplified.

As an optional embodiment of the present disclosure, referring to FIGS. 1 and 2, a fourth light-shielding member 105 is disposed above the light guide member 101, and a fifth light-shielding member 106 is disposed in rear of the light guide member 101.

A cavity 107 is enclosed by the first light-shielding member 103, the second light-shielding member 104, the fourth light-shielding member 105, and the fifth light-shielding member 106 together for accommodating the light source 102 and the light guide member 101.

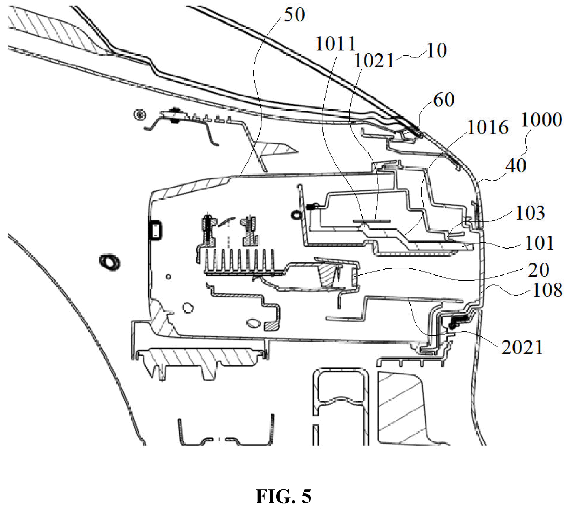

It should be noted that the cavity 107 is enclosed by the first light-shielding member 103, the second light-shielding member 104, the fourth light-shielding member 105, and the fifth light-shielding member 106 jointly for accommodating the light source 102 and the light guide member 101, so that the light form the multifunctional light strip 10 can be prevented from affecting other lamps of the vehicle, and meanwhile, the light beams from other lamps of the vehicle can be prevented from affecting the multifunctional light strip 10, thereby ensuring the light color quality of the multifunctional light strip 10 and avoiding or reducing stray light. As shown in FIGS. 1 and 5, the fifth light-shielding member 106 and the second light-shielding member 104 or the fourth light-shielding member 105 are integrally formed, or the second light-shielding member 104, the fourth light-shielding member 105, and the fifth light-shielding member 106 are integrally connected, and which specific light-shielding members are integrally connected can be set according to actual needs.

As an optional embodiment of the present disclosure, one or more of the circuit board 1021, the light-emitting elements, the driver chip, and the controller are fixed on the fourth light-shielding member 105, and the fourth light-shielding member 105 serves as a mounting bracket for the light source 102.

As an optional embodiment of the present disclosure, referring to FIGS. 1 and 2, a lamp cover 108 is further included, and the lamp cover 108 is disposed in a light beam exiting direction of the light-exiting portion 1012 to protect the multifunctional light strip 10.

As an optional embodiment of the present disclosure, at least two light guide inclined surfaces 1016 are provided between the light-incident portion 1011 and the light-exiting portion 1012 of the light guide member 101, and each of the light guide inclined surfaces 1016 is provided with a light distribution pattern.

It should be noted that the number and angle of the light guide inclined surface 1016, and details of the light distribution pattern can be set according to actual needs. By providing the light distribution pattern, the distribution of the light beam can be more accurately controlled, so that the light is scattered in a specific manner, thereby creating a distinctive visual effect of the lamp. Moreover, by reasonably designing the light distribution pattern, the situation that the strong light directly emitted from the light source 102 directly enters the sight lines of drivers of other vehicles or pedestrians can be reduced, and the risk of glare can be reduced. By providing the light guide inclined surface 1016 and the light distribution pattern, the light emitted from the lamp can be more uniform, reducing the dark and bright areas. For the application as the daytime running lamp, the turn signal lamp, or other lamps, the distribution of the light spot can be optimized by providing the light distribution pattern, so that the light distribution is more uniform, thereby improving the practicability of the multifunctional light strip 10 and improving the safety during driving at night.

As an optional embodiment of the present disclosure, referring to FIGS. 3 and 4, a condenser 109 is disposed between the light source 102 and the light-incident portion 1011.

It should be noted that the condenser 109 is mainly configured to focus and guide the light, so as to improve the irradiation efficiency and the concentration of the illumination of the multifunctional light strip 10, so that the light emitted from the light source 102 enters the light-incident portion 1011 of the light guide member 101 as much as possible. Generally, the light-emitting elements of the light source 102 can be mounted in the condenser 109 to improve the light condensing effect. Furthermore, the condenser 109 can be a parabolic reflector, an elliptical reflector, an optical waveguide, or other condensers 109 that meet the usage requirements.

As an optional embodiment of the present disclosure, referring to FIGS. 3 and 4, the condenser 109 and the light guide member 101 are integrally formed, which is beneficial to simplifying the structure of the multifunctional light strip 10, reducing the mounting steps and the mounting costs, and avoiding light leakage at the connection between the condenser 109 and the light guide member 101.

As an optional embodiment of the present disclosure, referring to FIG. 3, in the width direction of the vehicle body, the second light guide portion 1014 is longer than the first light guide portion 1013, which is beneficial to highlighting the differentiation between the light emitted at the first light guide portion 1013 and the second light guide portion 1014. For example, the length of the second light guide portion 1014 may be set to be at least twice the length of the first light guide portion 1013. The second light guide portion 1014 is used as the turn signal lamp to highlight the differentiation between the light effect during turning and other light effects, which facilitates the identification by other vehicles or pedestrians, thereby improving the driving safety.

As an optional embodiment of the present disclosure, referring to FIG. 1, a mounting positioning portion 1041 is provided between the light guide member 101 and the second light-shielding member 104.

It should be noted that the mounting positioning portion 1041 may be formed as a separate component, or the mounting positioning portion 1041 and the second light-shielding member 104 may be integrally formed, and the specific structure and position of the mounting positioning portion 1041 may be set according to actual production requirements. By the arrangement of the mounting positioning portion 1041, it is beneficial to improving the accuracy of the mounting position of the light guide member 101, thereby ensuring that the light beam emitted by the light source 102 can accurately exit the light guide member 101 from the light-exiting portion 1012 after passing through the light guide member 101, and ensuring the lighting precision and lighting effect of the multifunctional light strip 10.

As an optional embodiment of the present disclosure, referring to FIG. 5, the headlamp assembly 1000 further includes a high/low beam module 20, and the multifunctional light strip 10 and the high/low beam module 20 are integrated in the same lamp housing 50.

It should be noted that various lamps in the headlamp assembly 1000 on a single side of the front end of the vehicle are mounted in a single lamp housing 50, which can make the arrangement of various lamps in the headlamp assembly 1000 have a more uniform and smooth appearance. Since the multifunctional light strip 10, the high/low beam module 20, and other lamps are all integrated in a single lamp housing 50, the headlamp assembly 1000 can be better adapted to and coordinated with the structure of the front end of the vehicle. The lamp housing 50 is connected with the vehicle body frame and/or the vehicle body panel or other vehicle body components, and the lamp housing 50 can be connected with the vehicle body in various ways. For example, the lamp housing 50 can be fixedly connected with the vehicle body by various means, such as fastener connection, snap-fit connection, lap connection, or plug-in connection, so as to improve the mounting stability of the lamp housing 50. Meanwhile, the multifunctional light strip 10 and the high/low beam module 20 are integrated and mounted in the lamp housing 50, which can reduce the required independent components, simplify the production process, and reduce the material and assembly costs, thereby reducing the weight of the full-width headlamp to a certain extent, and optimizing the weight distribution of the entire vehicle. And, the mounting of the single lamp housing 50 is more convenient and faster than the mounting of multiple independent lamp housings 50; meanwhile, the integral lamp housing 50 can protect the electrical components in the lamp housing 50 from moisture, dust, and the like, which is beneficial to improving the sealing performance and the durability of the vehicle. Multiple lamps sharing a common lamp housing 50 is also beneficial to improving the space utilization of the full-width headlamp.

Referring to FIG. 5, as an optional embodiment of the present disclosure, the headlamp assembly 1000 further includes the lamp cover 108 disposed in front of the multifunctional light strip 10 and the high/low beam module 20.

It should be noted that the multifunctional light strip 10 and the high/low beam module 20 are both integrated and mounted in the lamp cover 108 to share the common lamp cover 108. Therefore, the appearance of most or all of the lamps at the front end of the vehicle is at least unified, so that the lamps at the front end of the vehicle have a smoother and consistent appearance, improving the aesthetics of the front end of the vehicle. It should be understood that, in addition to the multifunctional light strip 10 and the high/low beam module 20, the headlamp assembly 1000 may integrate other lamps into the common lamp cover 108, which can reduce repeated accessories and components, reduce the manufacturing costs to a certain extent, and enable at least some or all of the lamps to share components such as sensors, control units, and radiators, thereby reducing the costs, saving the mounting space, and making the structure of the headlamp assembly of the vehicle more compact and efficient. In addition, various lamps share a common lamp cover 108, which is also conducive to the better aerodynamic performance at the front end of the vehicle, and can reduce the air turbulence and resistance on the front of the vehicle to a certain extent, thereby improving the quality of the full-width headlamp at the front end of the vehicle.

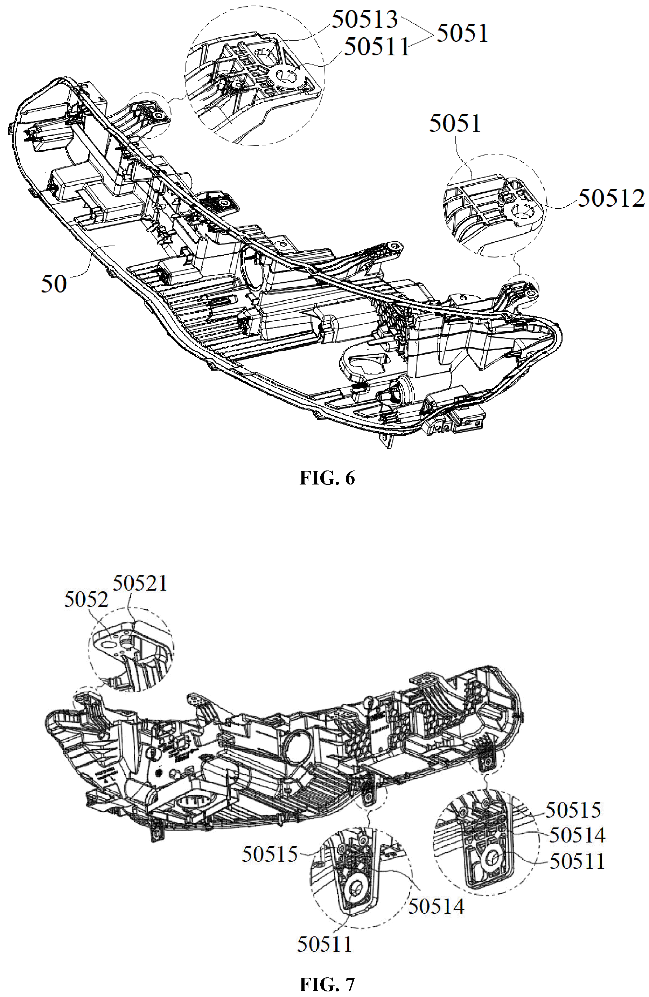

As an optional embodiment of the present disclosure, referring to FIGS. 6 and 7, as an optional embodiment of the present disclosure, the lamp housing 50 on each side includes a mounting bracket 5051 and an overlapping portion 5052.

The mounting bracket 5051 is configured to be connected to the vehicle body, and a plurality of mounting brackets are sequentially arranged in the length direction of the lamp housing 50, where at least part of the mounting brackets 5051 are provided with mounting portions 50511. The overlapping portion 5052 is overlapped and limited on a front end frame of the vehicle body or a sheet metal of the vehicle body.

At least one mounting bracket 5051 at one end of the lamp housing 50 is provided with a reference positioning portion 50512 configured to limit relative positions of the lamp housing 50 in the length direction and the width direction of the vehicle body.

At least one mounting bracket 5051 at the other end of the lamp housing 50 is provided with a movable positioning portion 50513 configured to limit the relative position of the lamp housing 50 in the length direction of the vehicle body.

It should be noted that the lamp housing 50 and the mounting bracket 5051 are integrally formed, such as by injection-molding. The lamp housing 50 is mounted in the length direction of the vehicle body when being mounted on the vehicle body. At least part of the mounting brackets 5051 are provided with the mounting portions 50511. The mounting portion 50511 includes a mounting hole or a plug-in post. The mounting bracket 5051 may be connected to a front end frame and/or a fender bracket of the vehicle body, for example, the mounting portion 50511 is connected to a vehicle body fender and/or a vehicle body sheet metal and/or a vehicle body frame through a fastener, where the fender bracket, the front end frame, and the vehicle body sheet metal are all structurally stable parts at the front end of the vehicle. The overlapping portion 5052 is integrally formed with the lamp housing 50. The overlapping portion 5052 is overlapped on the front end frame of the vehicle body, the vehicle body sheet metal, or other structurally stable parts of the vehicle body, and the overlapping portion 5052 may be provided with a limiting protrusion 50521 or a groove to achieve limiting with respect to the fender bracket or the vehicle body sheet metal. The reference positioning portion 50512 is a positioning hole or a positioning pin, where the reference positioning portion 50512 serves as a datum point or a reference point during the assembly process of the lamp housing 50, and all other structures of the lamp housing 50 are based on this point. One reference positioning portion 50512 is generally provided. The reference positioning portion 50512 is provided on at least one mounting bracket 5051 of the lamp housing 50 to limit the relative positions of the lamp housing 50 in the length direction and the width direction of the vehicle body. After the lamp housing 50 is mounted at the front end of the vehicle, the reference positioning portion 50512 on the lamp housing 50 is located at the end of the lamp housing 50 in the width direction of the vehicle body and away from the middle of the vehicle body, so that the lamp housing 50 can be stably mounted and kept in tight fit with other components at the front end of the vehicle, avoiding the problem that the appearance is affected by the gap at the front end of the vehicle. The movable positioning portion 50513 is configured to coordinate with the reference positioning portion 50512. The movable positioning portion 50513 is a waist-shaped hole or other structures that meet the usage requirements, where the width direction of the waist-shaped hole forms the positioning fit in the length direction of the vehicle with the positioning protrusion disposed on the front end frame of the vehicle body or the vehicle body sheet metal. The movable positioning portion 50513 is a portion or feature that needs to be moved or adjusted in position during the assembly process to complete the positioning. The movable positioning portion 50513 is configured to finely adjust and precisely position the relationship between the rest of the lamp housing 50 and other structures at the front end of the vehicle to ensure the flexibility and adjustment ability of assembly. Through the cooperation of the reference positioning portion 50512 and the movable positioning portion 50513, the accuracy of the mounting position of the lamp housing 50 is ensured, and the lamp housing 50 is prevented from affecting the accuracy of the mounting positions of all the lamps mounted on the lamp housing 50, thereby ensuring overall coordination and aesthetics of the full-width headlamp and other parts at the front end of the vehicle.

Referring to FIGS. 6 and 7, as an optional embodiment of the present disclosure, at least one of the mounting brackets 5051 is provided with a fragile portion 50514 and a connecting portion 50515, where the connecting portion 50515 is configured to be connected to a spare mounting bracket 5051.

It should be noted that the same mounting bracket 5051 of the lamp housing 50 is provided with the fragile portion 50514 and the connecting portion 50515 disposed at an upper end of the fragile portion 50514. Generally, the mounting bracket 5051 having the fragile portion 50514 and the connecting portion 50515 is the mounting bracket 5051 at the lower part of the lamp housing 50. The specific position of the fragile portion 50514 on the lamp housing 50 can be set according to actual needs. The fragile portion 50514 is a portion on the mounting bracket 5051 that is easily broken, and when subjected to an external force, the fragile portion 50514 on the mounting bracket 5051 is first broken. For example, when the front end of the vehicle is collided, the fragile portion 50514 is first broken to avoid or reduce the damage to other parts of the lamp housing 50, so as to further protect the lamp housing 50. The fragile portion 50514 has various arrangement forms, for example, a recessed structure or a plurality of continuous holes are disposed at the position of the mounting bracket 5051 where the fragile portion 50514 is provided. The connecting portion 50515 is a screw hole, a snap-fit hole, or a pin. The mounting bracket 5051, when broken at the fragile portion 50514, can be simply replaced with a spare mounting bracket 5051, thereby reducing maintenance costs and mounting complexity.

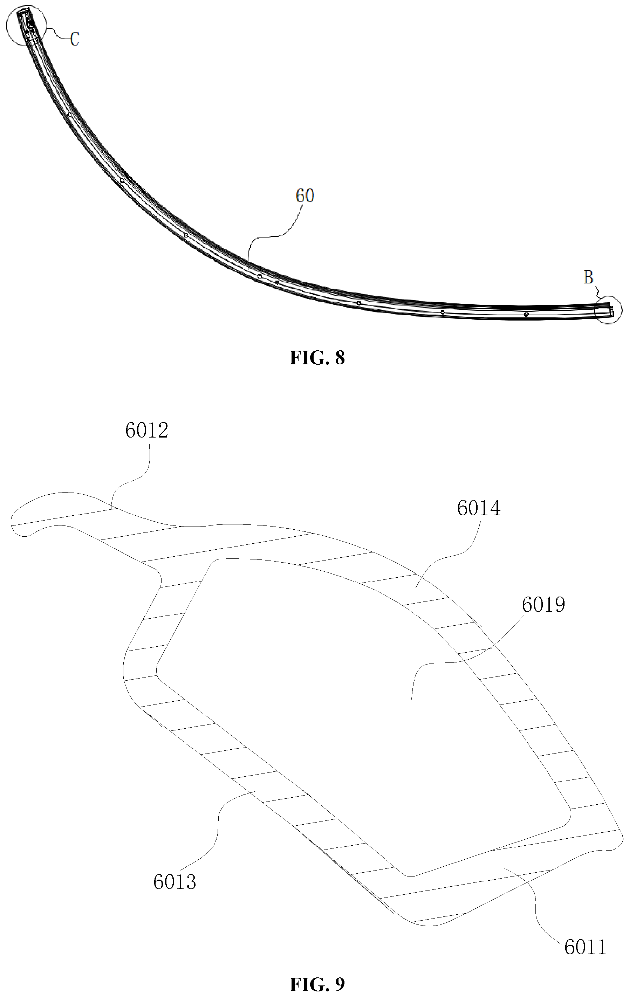

As an optional embodiment of the present disclosure, referring to FIGS. 5 and 8, a headlamp seal 60 is provided between the headlamp assembly 1000 and a front hood. The headlamp seal 60 is configured to form a seal between the headlamp assembly 1000 and the front hood, and the headlamp seal 60 has a variable cross-section. This type of seal has a varying cross-sectional design that enables it to accommodate and conform to surfaces with different shapes, including curved portions. The cross-section of the seal can be designed according to the change in the gap between the headlamp assembly 1000 and the front hood, so that the corresponding seal can be directly used for a specific vehicle model to improve the sealing effect on the curved portions. During production and manufacturing, since the headlamp seal 60 has a variable cross-section, it cannot be produced by an extrusion process, and the headlamp seal 60 can be produced by an injection-molding process. The headlamp seal 60 is generally made of a rubber material.

As an optional embodiment of the present disclosure, as shown in FIG. 8, a cross-sectional shape and/or a cross-sectional area of the headlamp seal 60 gradually changes from a first end to a second end of the headlamp seal 60, where the first end is located close to the middle of the vehicle in the width direction, and the second end is located close to the fender of the vehicle. The headlamp seal 60 is arranged in the width direction of the vehicle. In this way, the cross-sectional shape of the seal is varied to adapt to the contour of the headlamp assembly 1000, while enabling the sealing performance of the seal more suitable for the vehicle at different positions, especially at the curved portions.

As an optional embodiment of the present disclosure, as shown in FIG. 8, the headlamp seal 60 is arranged in the width direction of the vehicle, and the headlamp seal 60 gradually bends rearward from the first end to the second end. The aforementioned "bend" refers to that the headlamp seal 60 has a bent shape in a natural state, so that the headlamp seal 60 does not need to be further bent when sealing the curved headlamp assembly 1000, which avoids local non-conformity caused by local deformation of the headlamp seal 60 during bending. The bent shape of the seal itself can better adapt to the curved surface of the headlamp assembly 1000 or other components, thereby improving the sealing performance and reducing the potential water leakage or dust ingress. Meanwhile, since the seal already has the required bent state in advance, there is no need to perform complex adjustment or bending on the seal during mounting, which simplifies the mounting process and improves the efficiency.

As an optional embodiment of the present disclosure, as shown in FIG. 9, the headlamp seal 60 is provided with a strip-shaped cavity 6019 in its length direction. A hollow seal has a lighter weight than a solid seal. This is advantageous in applications such as vehicles where an overall weight needs to be reduced, helping to improve fuel efficiency. The hollow design can provide greater elasticity and deformation ability, so that the seal is easier to adapt to irregular surface shapes, thereby improving the sealing effect. During injection-molding of the strip-shaped cavity 6019, strip-shaped cores can be provided in cavities of upper and lower molds, and after the injection-molding is completed, the strip-shaped cavity 6019 can be formed by pulling the cores from both ends. Since the headlamp seal 60 is elastic, the cores can be pulled through elastic deformation even if the headlamp seal 60 has a variable cross-section.

As an optional embodiment of the present disclosure, as shown in FIG. 8, a cross-sectional shape and/or a cross-sectional area of the strip-shaped cavity 6019 gradually changes from the first end to the second end of the headlamp seal 60. Since the headlamp seal 60 has a variable cross-section, the strip-shaped cavity 6019 disposed therein also has a corresponding variable cross-section. Matching with the variable cross-sectional headlamp seal 60, the variable cross-sectional strip-shaped cavity 6019 may better accommodate external strain, thereby providing better performance in sealing or connection applications.

As an optional embodiment of the present disclosure, as shown in FIG. 9, the headlamp seal 60 includes a lamp assembly sealing surface 6011, a hood sealing edge 6012, a mounting surface 6013, and an arcuate surface 6014.

The lamp assembly sealing surface 6011 is configured to fit against the headlamp assembly 1000. The lamp assembly sealing surface 6011, as a part of the headlamp seal 60, is specially designed to seal against the headlamp assembly 1000. The lamp assembly sealing surface 6011 functions to provide a seal, ensuring an effective seal between the headlamp assembly 1000 and other parts of the vehicle, so as to prevent moisture, dust, or other external elements from entering the interior of the headlamp assembly 1000.

The hood sealing edge 6012 is configured to fit against a lower side of a front end of the front hood. The hood sealing edge 6012 is specially designed to seal against the lower side of the front end of the front hood. Similar to the lamp assembly sealing surface 6011, the hood sealing edge 6012 functions to provide a seal, ensuring an effective seal formed between the lower side of the front end of the front hood and other parts of the vehicle, so as to prevent external elements from entering the interior of an engine compartment (a front compartment) of the vehicle.

The mounting surface 6013 is configured to be mounted to the vehicle frame. The mounting surface 6013, as a part of the headlamp seal 60, is designed for being mounted to the vehicle frame. The mounting surface 6013 is a part of the headlamp seal 60 for positioning and mounting during assembly of the headlamp seal 60, the position of which determines the final mounting position of the seal.

The arcuate surface 6014 is disposed opposite to the mounting surface 6013. The hood sealing edge 6012 smoothly transitions to the arcuate surface 6014, and the arcuate surface 6014 and the hood sealing edge 6012 fit against the upper engine hood. The arcuate surface 6014, as a part of the headlamp seal 60, is designed as a curved or arc-shaped surface that adapts to the vehicle structure, so as to ensure that the seal can better conform to the shape of the vehicle structure when connected to the vehicle frame, and improve the sealing performance.

As an optional embodiment of the present disclosure, as shown in FIG. 9, the lamp assembly sealing surface 6011 includes a flange portion and a flat portion. A junction line between the flange portion and the flat portion is configured to fit against an upper edge of the headlamp assembly 1000. The flange portion, as a specific area of the lamp assembly sealing surface 6011, is generally in the shape of a protrusion or bulge. The flange portion is designed to provide additional support or sealing when fitting against the upper edge of the headlamp assembly 1000. The flange portion can generally conform to the shape of the headlamp assembly 1000 to ensure better conformability during sealing. The flat portion is adjacent to the flange portion with a junction line therebetween. The junction line is designed to ensure a smooth and effective transition of the sealing surface when fitting against the upper edge of the headlamp assembly 1000. Such a design helps prevent water or dust from entering the interior of the headlamp assembly 1000.

In a specific embodiment of the present disclosure, the lamp assembly sealing surface 6011 is always oriented towards the headlamp assembly 1000, and an angle between the lamp assembly sealing surface 6011 and an upper end surface of the headlamp assembly 1000 remains constant. Maintaining this constant orientation and angle can ensure a consistent sealing performance. This helps prevent moisture, dust, or other external elements from entering the interior of the headlamp assembly 1000.

In a specific embodiment of the present disclosure, a width direction of the hood sealing edge 6012 is always oriented towards the front hood, and the width direction of the hood sealing edge 6012 is always oriented towards the engine hood. Maintaining the width direction of the hood sealing edge 6012 towards both the front hood and the engine hood helps ensure an effective sealing provided in these critical areas. This is crucial for preventing moisture, dust, or other external elements from entering the interior of the engine compartment.

In a specific embodiment of the present disclosure, a length direction of the lamp assembly sealing surface 6011 is the same as a length direction of the upper end of the headlamp assembly 1000, and a length direction of the hood sealing edge 6012 is the same as a length direction of a front end plate of the front hood. This design ensures that the lamp assembly sealing surface 6011 can effectively cover the entire upper end of the headlamp assembly 1000, thereby providing a comprehensive sealing and support. Meanwhile, this design also ensures that the hood sealing edge 6012 provides a continuous and consistent sealing along the front end plate of the front hood, preventing external elements from entering the engine compartment.

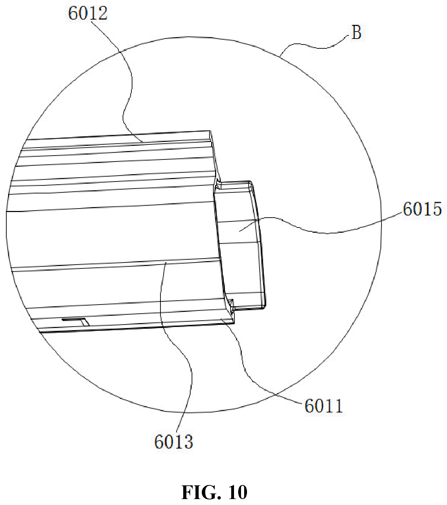

As an optional embodiment of the present disclosure, as shown in FIG. 10, a first limiting edge 6015 protrudes from the first end in the length direction of the headlamp seal 60, and a step is formed between the first limiting edge 6015 and the arcuate surface 6014. As shown in FIG. 4, a second limiting edge 6016 protrudes from the second end in the length direction of the headlamp seal 60, and the first limiting edge 6015 is flush with the arcuate surface 6014. The first limiting edge 6015 and the second limiting edge 6016 are configured to limit and fix two ends of the seal body to prevent the two ends from warping.

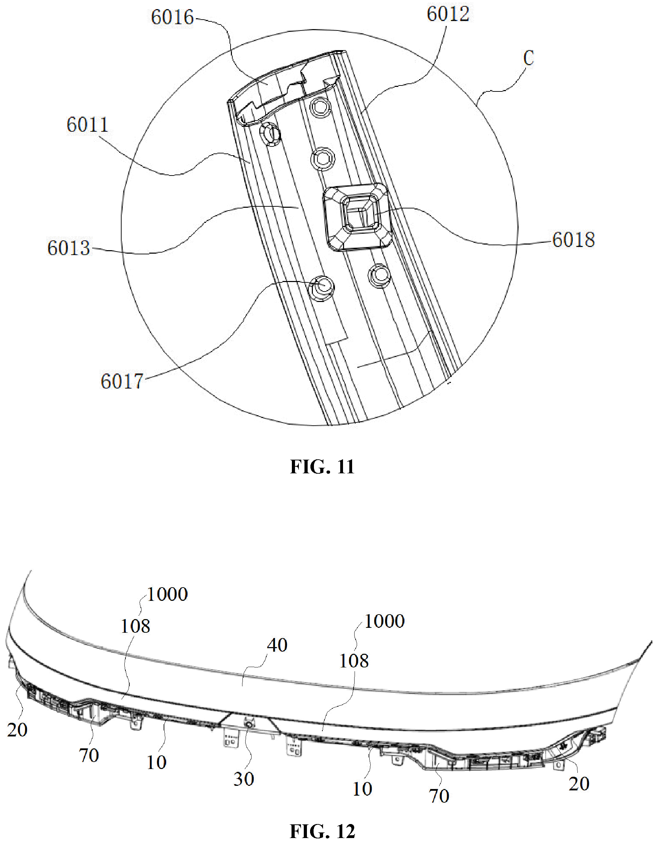

As an optional embodiment of the present disclosure, as shown in FIG. 11, the mounting surface 6013 is provided, at a position thereof close to the second end, with a plurality of positioning protrusions 6017, and the mounting surface 6013 is provided, at a position thereof close to the second end, with an elastic plug 6018 for insertion into a mounting hole on the vehicle frame. The positioning protrusion 6017 is a structure disposed on the mounting surface 6013, and is generally in the form of a protruding column. These protrusions function to provide a positioning function to ensure that the assembly can be accurately aligned with corresponding holes or recesses of the vehicle frame or other components during mounting. The positioning protrusions 6017 may help ensure that the assembly maintains the proper position and orientation during mounting. The elastic plug 6018 is an elastic structure that can be inserted into a mounting hole on the vehicle frame. The elastic plug 6018 is designed to adapt to and fill the mounting hole on the vehicle frame, providing a tight connection. This helps ensure that the assembly is securely fixed to the vehicle frame after mounting, and may also provide shock absorption and loosening prevention.

The headlamp seal 60 in the above solution is of a variable cross-section, can adapt to each gap between the headlamp assembly 1000 and the hood through the change in the cross-section, and can change the cross-section as the gap between the headlamp assembly 1000 and the hood changes, so that the headlamp seal 60 can completely fit against the curved headlamp assembly 1000 and the hood without twisting, thereby ensuring the sealing effect. The headlamp seal 60 may be formed by the injection-molding process.

As shown in FIG. 12, the present disclosure further provides a full-width headlamp, including a multifunctional light strip 10 and a high/low beam module 20.

The multifunctional light strip 10 extends from two sides of the front end of the vehicle to the middle of the front end of the vehicle. The high/low beam module 20 is mounted below the multifunctional light strip 10 and disposed close to the two sides of the front end of the vehicle.

It should be noted that the multifunctional light strip 10 may be a set of lamps such as a turn signal lamp, a daytime running lamp, a position lamp, or other lamps. The multifunctional light strip 10 extends from the two sides of the front end of the vehicle to the middle of the front end of the vehicle, which can provide a distinctive and streamlined appearance, making the vehicle look more stylish and eye-catching. For example, the multifunctional light strip 10 is an LED strip, so that the multifunctional light strip 10 is more delicate and modern, and the multifunctional light strip 10 extends from the two sides of the front end of the vehicle to the middle of the front end of the vehicle, so that the multifunctional light strip 10 can be distributed across a wider area, thereby providing a better headlamp illumination effect and enhancing the illumination quality for both sides of the road and the entire front area, and thus the safety at night and in severe weather is improved. The high/low beam module 20 includes a high beam lamp and a low beam lamp, and the high/low beam module 20 is located below the multifunctional light strip 10. Different types of lamps are distributed at different heights, so that other people on the road can easily identify the type and operation state of the vehicle. For example, the turn signal provided by the multifunctional lamp can facilitate the identification by pedestrians or drivers of passing vehicles. The high beam lamp and the low beam lamp are generally the main lighting sources for the vehicle to travel at night. The high/low beam module 20 is disposed below the multifunctional light strip 10, which is beneficial for the light from the high beam lamp and the low beam lamp to be more directly projected onto the road surface, rather than being irradiated into the eyes of other pedestrians or drivers of passing vehicles, so that glare is reduced, and the safety of the vehicle during travelling at night is improved. The multifunctional light strip 10 can connect various lamps to form a continuous line or light strip and extend across the entire width of the front end of the vehicle, thereby creating a continuous and smooth visual effect, so that the front end of the vehicle has the integrity and the smoothness of the line. This makes the front end of the vehicle appear more coordinated and unified.

Referring to FIG. 12, as an optional embodiment of the present disclosure, a front camera module 30 is further provided in the middle of the front end of the vehicle, and the multifunctional light strip 10 is distributed on both sides of the front camera module 30.

It should be noted that through the cooperation of the multifunctional light strip 10 and the front camera module 30, a distinctive visual marking can be provided, the recognizability of the vehicle can be increased, and modern touch and aesthetic value can be added to the vehicle. The multifunctional light strip 10 on both sides of the front camera module 30 can illuminate the area in front of the camera at night, and improve the field of view and image quality of the camera, thereby enhancing the function of the automatic driving assistance system (such as adaptive cruise control, lane keeping assistance, etc.) of the vehicle and ensuring the driving safety.

Referring to FIG. 12, as an optional embodiment of the present disclosure, the full-width headlamp further includes an exterior trim panel 40 located above the multifunctional light strip 10.

It should be noted that, different types of vehicles also distinguish between low-configuration model and high-configuration model, and the type and number of lamps at the front end of the vehicle of the low-configuration model is generally less than the type and number of lamps at the front end of the vehicle of the high-configuration model. As a result, the lamp structure for the low-configuration model requires redesign and redevelopment of new molds, making it impossible to reuse parts for the high-configuration model and molds for manufacturing the parts for the high-configuration model. This results in a significant increase in the manufacturing costs of the full-width headlamp for the low-configuration model, which is not conducive to the reduction of the overall costs of the vehicle of the low-configuration model. Therefore, in the missing part above the multifunctional light strip 10, the missing lamps are replaced with the exterior trim panel 40, enabling the multifunctional light strip 10 to continue using that for the high-configuration model. This achieves the reuse of lamp molds for the high-configuration model and avoids the redesign workload for the multifunctional light strip 10 for the low-configuration model, thereby reducing the overall cost of the vehicle of the low-configuration model.

Referring to FIG. 12, as an optional embodiment of the present disclosure, the exterior trim panel 40 is disposed to extend across the front end of the vehicle body in the width direction of the vehicle body.

It should be noted that the exterior trim panel 40 is disposed to extend across the entire front end of the vehicle body in the width direction of the vehicle body, and can replace the logo lamp and the full-width interactive lamp disposed above the multifunctional light strip 10 for the high-configuration model, thereby realizing a seamless transition between the front lighting system for the high-configuration model and the front lighting system for the low-configuration model, enabling the reuse of parts across different configuration models, avoiding repeated mold development, and reducing the manufacturing costs for the low-configuration model.

As an optional embodiment of the present disclosure, referring to FIG. 5, the high/low beam module 20 is provided, on a side away from the multifunctional light strip 10, with a light-shielding trim panel 2021, which can shield a lower side of the high/low beam module 20 in the light exiting direction. The light-shielding trim panel 2021, which can shield the lower side of the high/low beam module 20 in the light exiting direction, in coordination with the second light-shielding member 104 located on the lower side of the multifunctional light strip 10, which can shield an upper side of the high/low beam module 20 in the light exiting direction, can reduce the stray light emitted by the high/low beam module 20. Meanwhile, a distance between the high/low beam module 20 and the lamp cover 14 is greater than a preset distance, so as to avoid or reduce glare and improve the safety of the vehicle during travelling at night.

The present disclosure further provides a vehicle, including the headlamp assembly 1000 or the full-width headlamp.

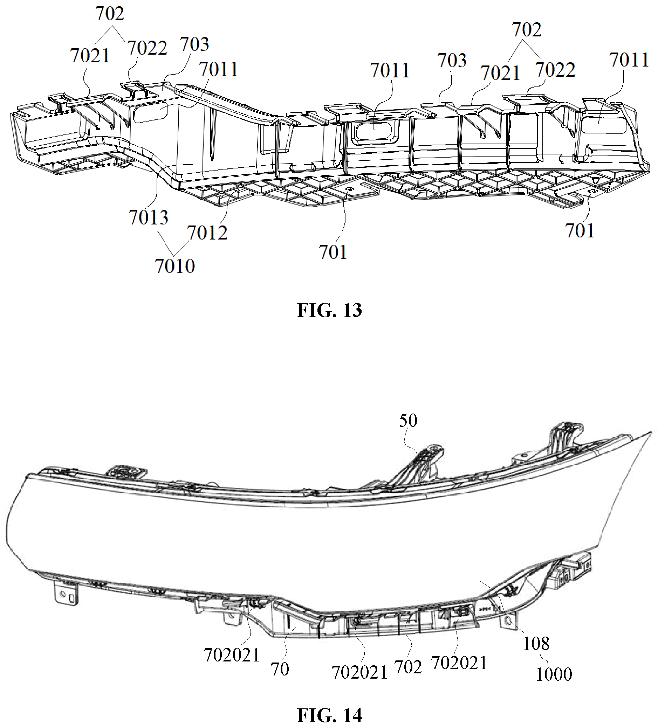

As shown in FIGS. 12 and 13, as an optional embodiment of the present disclosure, the vehicle further includes a mounting bracket 70 for a front bumper, where the mounting bracket 70 for the front bumper includes a bracket body 7010. The bracket body 7010 is provided with a first connecting portion 701, a slot structure 702, and a first limiting portion 703.

The first connecting portion 701 is configured to be connected to the headlamp assembly 1000. The slot structure 702 is configured to allow an edge of a front bumper 70300 to be inserted therein in a first direction, where the first direction is a front-rear direction of the vehicle body. The first limiting portion 703 is configured to retain the edge of the front bumper 70300, that is inserted into the slot structure 702, in the slot structure 702.

It should be noted that the mounting bracket 70 for the front bumper is configured to connect the headlamp assembly 1000 at the front end of the vehicle to the front bumper 70300. When in use, the mounting bracket 70 for the front bumper is mounted on the headlamp assembly 1000, and then the front bumper 70300 is mounted on the mounting bracket 70 for the front bumper. As shown in FIGS. 12 to 14, the bracket body 7010 of the mounting bracket 70 for the front bumper is provided with the first connecting portion 701 configured to be connected to the headlamp assembly 1000, where the first connecting portion 701 is a hole or a connecting screw connected to the headlamp assembly 1000, or other structures that can be fixedly connected or detachably connected to the headlamp assembly 1000. By disposing the slot structure 702 on the bracket body 7010, the edge of the front bumper 70300 can be quickly mounted on the mounting bracket 70 for the front bumper in the first direction. By providing the first limiting portion 703, the edge of the front bumper 70300, that has been inserted into the slot structure 702, can be retained in the slot structure 702. Through the cooperation between the slot structure 702 and the first limiting portion 703, the stable mounting of the front bumper 70300 can be realized. The first limiting portion 703 may provide limiting by snap-fit or screw connection. The front bumper 70300 is exposed to the outside of the vehicle, the use of the screw connection may lead to a corrosion problem after a long time, with a relatively complicated and inefficient mounting process; meanwhile, a mounting hole also needs to be provided on the front bumper 70300 for mounting screws, which is not conducive to the aesthetic appearance of the front end of the vehicle. Therefore, the first limiting portion 703 of the present disclosure preferably adopts the snap-fit connection to provide limiting. The first limiting portion 703 is in snap-fit connection with the front bumper 70300 by cooperating with the slot structure 702 on the mounting bracket 70 for the front bumper. On the one hand, a shock absorption function can be achieved. The snap-fit structure, in which the slot structure 702 and the first limiting portion 703 cooperate with each other, can absorb a certain amount of impact force when the vehicle vibrates or is subjected to a collision, thereby reducing damage to the vehicle. There is a certain size difference in the structure and manufacturing process of the mounting bracket 70 for the front bumper and the front bumper 70300. By using the connection manner in which the slot structure 702 cooperates with the first limiting portion 703, fine adjustment and alignment can be realized to a certain extent during the mounting process, so that the front bumper 70300 perfectly fits the vehicle body. When the first limiting portion 703 and the front bumper 70300 are in snap-fit connection with each other and the front bumper 70300 needs to be detached, since the mounting bracket 70 for the front bumper is in snap-fit connection with the front bumper 70300, the front bumper 70300 can be detached by directly pulling it outward with force, which is convenient for detaching without affecting the assembly of other parts.

As an optional embodiment of the present disclosure, referring to FIG. 13, the mounting bracket 70 for the front bumper is integrally provided, which helps simplify the assembly process, ensure the alignment accuracy between the front bumper 70300, the mounting bracket 70 for the front bumper, and the headlamp assembly 1000, improve the stability and durability of the entire front end of the vehicle, and facilitate maintenance and replacement.

As an optional embodiment of the present disclosure, referring to FIG. 12, the mounting bracket 70 for the front bumper may be provided in two groups, which are symmetrically arranged at the front end of the vehicle to realize the fixed mounting of the front bumper 70300.

As an optional embodiment of the present disclosure, referring to FIG. 13, the first limiting portion 703 is a protrusion, a groove, or a through hole. When two or more first limiting portions 703 are provided, the first limiting portion 703 is at least one of the protrusion, the groove, or the through hole.

As an optional embodiment of the present disclosure, referring to FIG. 13, the slot structure 702 includes a first clamping portion 7021 and a second clamping portion 7022.

The first clamping portion 7021 and the second clamping portion 7022 are both cantilevered from the bracket body 7010 towards the front end of the vehicle, so that the slot structure 702 can at least generate a vertical support force for the front bumper 70300.

It should be noted that, the front end of the vehicle refers to a direction of the vehicle body towards the front end of the vehicle. With the arrangement of the first clamping portion 7021 and the second clamping portion 7022, rapid and stable clamping of the front bumper 70300 can be achieved. The first clamping portion 7021 and the second clamping portion 7022 are generally arranged in parallel to clamp the front bumper 70300, and the slot structure 702 can be disposed perpendicular to the bracket body 7010 or at an angle with the bracket body 7010, depending on actual requirements. However, it is necessary to ensure that the slot structure 702 can at least generate the vertical support force for the front bumper 70300 to support the mounted front bumper 70300. Optionally, the first clamping portion 7021 and the second clamping portion 7022 can be directly integrally formed with the bracket body 7010, but it should be understood that the first clamping portion 7021 and the second clamping portion 7022 can also be mounted on the bracket body 7010 through fasteners such as screws.

As an optional embodiment of the present disclosure, referring to FIG. 13, the first clamping portion 7021 and the second clamping portion 7022 may be arranged symmetrically in structure or may be different in structure. A plurality of first clamping portions 7021 and a plurality of second clamping portions 7022 may be provided, where the structures of the plurality of first clamping portions 7021 may not be completely the same, and the structures of the plurality of second clamping portions 7022 may not be completely the same, which may be adaptively set according to actual requirements.

Referring to FIG. 14, as an optional embodiment of the present disclosure, the bracket body 7010 is provided with a positioning hole 7011 configured to be connected to a positioning post 702021 on the headlamp assembly 1000.

It should be noted that the positioning hole 7011 is provided on the bracket body 7010 to adapt to mounting of the positioning post 702021 on the headlamp assembly 1000, so as to realize the mounting and positioning of the mounting bracket 70 for the front bumper. And, the positioning hole 7011 can snap-fit and limit the positioning post 702021 on the headlamp assembly 1000, so as to prevent an upper portion of the bracket body 7010 from tipping and collapsing in a resultant direction of the positive X-axis direction and the negative Z-axis direction.

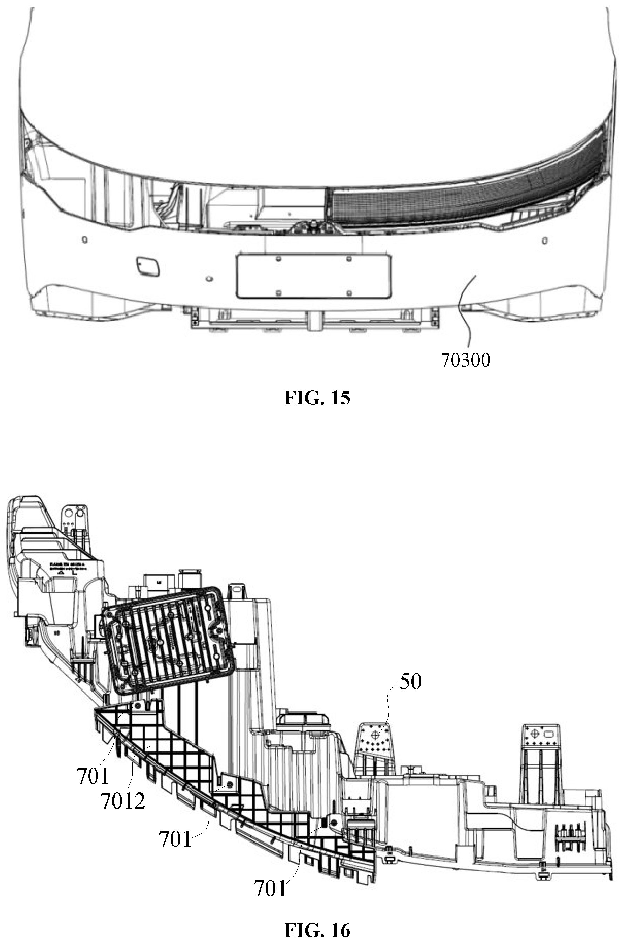

Referring to FIGS. 13 and 16, as an optional embodiment of the present disclosure, the bracket body 7010 further includes a first wall 7012 configured to fit the bottom of the headlamp assembly 1000, and a second wall 7013 configured to fit the front of the headlamp assembly 1000, which can improve the assembly adaptability and mounting stability of the bracket body 7010 and the headlamp assembly 1000.

The first limiting portion 703 is disposed on the first wall 7012, which is beneficial to the connection between the bracket body 7010 and the lamp housing 50 at the bottom of the headlamp assembly 1000. The slot structure 702 is disposed on the second wall 7013 on a side facing the front bumper 70300, that is, the slot structure 702 is disposed on the bracket body 7010 and located on a side facing the front bumper 70300, which is beneficial to the quick insertion mounting of the front bumper 70300.

Furthermore, the headlamp assembly 1000 includes the lamp housing 50 and the lamp cover 108, the first wall 7012 of the bracket body 7010 is fit with the lamp housing 50, and the second wall 7013 of the bracket body 7010 is fit with the lamp cover 108.

Referring to FIGS. 14 and 16, as an optional embodiment of the present disclosure, the first connecting portion 701 and the headlamp assembly 1000 are connected by fasteners.

It should be noted that, the lamp housing 50 is located at the bottom of the headlamp assembly 1000, and the lamp cover 108 is generally penetrated by fasteners such as screws, which may easily cause light leakage and affect the aesthetics of the headlamp assembly 1000. The first connecting portion 701 is located on the first wall 7012 and is connected to the lamp housing 50 at the bottom of the headlamp assembly 1000, and the lamp housing 50 is penetrated by the screws, which generally does not affect the aesthetic appearance of the headlamp assembly 1000 as viewed from people's perspective. And, the bottom of the mounting bracket 70 for the front bumper serves as the main load-bearing portion. If the snap-fit connection is adopted, the bracket body 7010 may easily become separated from the headlamp assembly 1000. Therefore, the first connecting portion 701 is connected to the headlamp assembly 1000 by means of the fasteners, so as to improve the connection stability between the mounting bracket 70 for the front bumper and the headlamp assembly 1000.

Referring to FIG. 13, as an optional embodiment of the present disclosure, the first clamping portion 7021 and the second clamping portion 7022 are disposed in a staggered manner in an upper edge direction of the bracket body 7010.

It should be noted that, by disposing the first clamping portion 7021 and the second clamping portion 7022 in the staggered manner in the upper edge direction of the bracket body 7010, a plurality of first clamping portions 7021 and a plurality of second clamping portions 7022 are provided, so that the clamping force can be uniformly distributed on a relatively large contact surface, the concentrated stress can be reduced, and the risk of deformation or damage that may occur during the clamping process can be reduced. The staggered arrangement of the first clamping portion 7021 and the second clamping portion 7022 can provide the better stability, especially for the irregularly shaped front bumper 70300. By arranging the first clamping portion 7021 and the second clamping portion 7022 in the staggered manner, more support points and contact areas can be provided, and the clamped front bumper 70300 can be prevented from moving or deviating from the proper position during the clamping process. Meanwhile, the staggered arrangement of the first clamping portion 7021 and the second clamping portion 7022 can minimize the gap between the first clamping portion 7021 and the second clamping portion 7022 in the upper edge direction of the bracket body 7010, so that the clamping force can be enhanced by providing tighter clamping. And, the staggered arrangement of the first clamping portion 7021 and the second clamping portion 7022 can provide more flexible clamping openings to adapt to different shapes and sizes of the edges of the front bumper 70300, thereby improving the adaptability of the first clamping portion 7021 and the second clamping portion 7022 to the clamping and fixing of the front bumper 70300.

In summary, the present disclosure effectively overcomes some practical problems in the related art and thus has high utilization value and practical significance.

The above embodiments are merely illustrative of the principles and effects of the present disclosure, and are not intended to limit the present disclosure. Any person skilled in the art may modify or change the foregoing embodiments without departing from the spirit and scope of the present disclosure. Therefore, all equivalent modifications or changes made by a person of ordinary skill in the art without departing from the spirit and technical ideas disclosed in the present disclosure shall still be covered by the claims of the present disclosure.

## Claims

1. A headlamp assembly, comprising a multifunctional light strip, wherein the multifunctional light strip comprises:
a light guide member comprising a light-incident portion on one end and a light-exiting portion on another end, wherein the light-exiting portion is configured in a flat shape;
a light source disposed opposite to the light-incident portion;
a first light-shielding member covering a first side of the light-exiting portion; and
a second light-shielding member covering a second side of the light-exiting portion,
wherein an end of the light-exiting portion extends beyond edges of the first light-shielding member and the second light-shielding member.

2. The headlamp assembly according to claim 1, wherein the light source comprises a first light source and a second light source; and
the light guide member comprises a first light guide portion disposed corresponding to the first light source and a second light guide portion disposed corresponding to the second light source, and the first light guide portion and the second light guide portion are arranged in a width direction of a vehicle body.

3. The headlamp assembly according to claim 2, wherein at least one of the first light source or the second light source comprises at least two light-emitting elements with different light colors, which are configured to be independently controllable.

4. The headlamp assembly according to claim 2, wherein a gap is provided between the first light guide portion and the second light guide portion, a third light-shielding member is disposed in the gap, and the third light-shielding member is connected to the first light-shielding member or the second light-shielding member;
a fourth light-shielding member is disposed above the light guide member, and a fifth light-shielding member is disposed in rear of the light guide member; and
a cavity is enclosed by the first light-shielding member, the second light-shielding member, the fourth light-shielding member, and the fifth light-shielding member together, and is configured to accommodate the light source and the light guide member.

5. The headlamp assembly according to claim 1, wherein at least two light guide inclined surfaces are provided between the light-incident portion and the light-exiting portion of the light guide member, and each of the light guide inclined surfaces is provided with a light distribution pattern.

6. The headlamp assembly according to claim 1, further comprising a high/low beam module, wherein the multifunctional light strip and the high/low beam module are integrated in a common lamp housing.

7. The headlamp assembly according to claim 6, further comprising a lamp cover disposed in front of the multifunctional light strip and the high/low beam module.

8. The headlamp assembly according to claim 6, wherein the lamp housing comprises on each side:
a mounting bracket configured to be connected to a vehicle body, wherein a plurality of mounting brackets are sequentially disposed in a length direction of the lamp housing, and at least part of the mounting brackets are provided with mounting portions; and
an overlapping portion, overlapped and limited on a front end frame of the vehicle body or a sheet metal of the vehicle body;
wherein at least one mounting bracket at one end of the lamp housing is provided with a reference positioning portion configured to limit relative positions of the lamp housing in a length direction and a width direction of the vehicle body; and
at least one mounting bracket at another end of the lamp housing is provided with a movable positioning portion configured to limit the relative position of the lamp housing in the length direction of the vehicle body.

9. The headlamp assembly according to claim 8, wherein at least one of the mounting brackets is provided with a fragile portion and a connecting portion, and the connecting portion is configured to be connected to a spare mounting bracket.

10. The headlamp assembly according to claim 1, wherein a headlamp seal is provided between the headlamp assembly and a front hood;
the headlamp seal is configured to form a seal between the headlamp assembly and the front hood, and the headlamp seal has a variable cross-section;
a cross-sectional shape and/or a cross-sectional area of the headlamp seal gradually changes from a first end to a second end of the headlamp seal; and
the first end is located close to a middle of a vehicle in a width direction, and the second end is located close to a fender of the vehicle.

11. The headlamp assembly according to claim 10, wherein the headlamp seal is provided with a strip-shaped cavity in a length direction thereof, and a cross-sectional shape and/or a cross-sectional area of the strip-shaped cavity gradually changes from the first end to the second end of the headlamp seal.

12. The headlamp assembly of claim 10, wherein the headlamp seal comprises:
a lamp assembly sealing surface configured to fit against the headlamp assembly;
a hood sealing edge configured to fit against a lower side of a front end of the front hood;
a mounting surface configured to be mounted to a vehicle frame; and
an arcuate surface disposed opposite to the mounting surface.

13. A full-width headlamp, comprising:
a multifunctional light strip extending from two sides of a front end of a vehicle to a middle of the front end of the vehicle; and
a high/low beam module mounted below the multifunctional light strip and disposed close to the two sides of the front end of the vehicle.

14. The full-width headlamp according to claim 13, wherein a front camera module is further provided in the middle of the front end of the vehicle, and the multifunctional light strip is distributed on two sides of the front camera module.

15. The full-width headlamp according to claim 13, further comprising an exterior trim panel, wherein the exterior trim panel is located above the multifunctional light strip, and the exterior trim panel is disposed to extend across a front end of a vehicle body of the vehicle in a width direction of the vehicle body.

16. A vehicle, comprising the headlamp assembly of any one of claims 1 to 12 or the full-width headlamp of any one of claims 13 to 15.

17. The vehicle according to claim 16, further comprising a mounting bracket for a front bumper, wherein the mounting bracket for the front bumper comprises a bracket body provided with:
a first connecting portion configured to be connected to a lamp;
a slot structure configured to enable an edge of the front bumper to be inserted therein in a first direction, wherein the first direction is a front-rear direction of a vehicle body; and
a first limiting portion configured to retain the edge of the front bumper, that is inserted into the slot structure, in the slot structure.

18. The vehicle according to claim 17, wherein the slot structure comprises a first clamping portion and a second clamping portion;
wherein the first clamping portion and the second clamping portion are both cantilevered from the bracket body towards a front end of the vehicle, so that the slot structure can at least generate a vertical support force for the front bumper.

19. The vehicle according to claim 17, wherein the bracket body further comprises a first wall configured to fit and mate with a bottom of the lamp, and a second wall configured to fit and mate with a front of the lamp; and
the first limiting portion is disposed on the first wall, and the slot structure is disposed on the second wall facing the front bumper.
